# EUROPÄISCHE PATENTANMELDUNG

(11) **EP 1 011 275 A1**
(43) Veröffentlichungstag der Anmeldung: **21.06.2000**
(21) Anmeldenummer: 98123948.6
(22) Anmeldetag: 17.12.1998
(51) Int. Cl.: H04Q 7/22

(54) **Verfahren und Vorrichtung zur Ermittlung einer Signalisierungsadresse einer Mobilfunkvermittlungsstelle in einem zellularen Kommunikationssystem**

(71) Anmelder: TELEFONAKTIEBOLAGET LM ERICSSON, 126 25 Stockholm (SE)
(72) Erfinder: Scheurich, Jan, 52074 Aachen (DE)
(74) Vertreter: Mohsler, Gabriele

(57) **Zusammenfassung**

Verfahren und Vorrichtungen zur Ermittlung einer Signalisierungsadresse einer Mobilfunkvermittlungsstelle in einem zellularen Kommunikationssystem das sowohl paketvermittelte als auch leitungsvermittelte Dienste anbietet. Das Verfahren basiert darauf, dass anstatt Informationen über den Standort eines Endgerätes zu verwenden, Informationen über Einrichtungen des Systems die zur Erreichung eines Endgerätes genutzt werden um die Mobilfunkvermittlungsstelle zu bestimmen, in deren Versorgungsbereich sich das Endgerät befindet. Aus Kenntnis derartiger Informationen wird die Signalisierungsadresse ermittelt. Dazu werden beispielsweise Zuordnungstabellen oder Sortierbäume verwendet, die einer oder mehreren Einrichtungen oder einer Information die eine oder mehrere Einrichtungen identifiziert, die gesuchte Signalisierungsadresse zuordnen.

## Beschreibung

Die Erfindung betrifft ein Verfahren und eine Vorrichtung zur Ermittlung einer Signalisierungsadresse einer Mobilfunkvermittlungsstelle in einem zellularen Kommunikationssystem das sowohl leitungsvermittelte als auch paketvermittelte Dienste anbietet. Insbesondere betrifft die Erfindung die Kombination GPRS (General Packet Radio Service) in GSM (Global Standard for Mobile Communication). Eine weitere Ausgestaltung betrifft ein System, das UMTS (Universal Mobile Telecommunication System) anbietet.

Aus dem Stand der Technik sind zellulare Kommunikationssysteme, die sowohl leitungsvermittelte als auch paketvermittelte Dienste anbieten, bekannt. So wird in GSM TS 03.60 V6.1.0 GPRS Service Description, Stage 2 die Umsetzung des paketvermittelten GPRS im leitungsvermittelten GSM beschrieben.

In einem zellularen Kommunikationssystem, das sowohl leitungsvermittelte als auch paketvermittelte Dienste anbietet, wird die Kommunikation mit Endgeräten ― beispielsweise zur Standortaktualisierung oder Anmeldung im Netz - von den Mobilfunkvermittlungsstellen eines der beiden Dienste, im folgenden verwaltender Dienst genannt, übernommen. Zur Standortaktualisierung meldet sich ein Endgerät bei der neuen Mobilfunkvermittlungsstelle des verwaltenden Dienstes an und liefert erste Endgerätedaten. Diese Mobilfunkvermittlungsstelle leitet anschliessend die Standortaktualisierung bei der Heimatdatei, im weiteren gemäss des angeführten Standards HLR (Home Location Register) genannt, ein. Das HLR informiert die vorherige Mobilfunkvermittlungsstelle des verwaltenden Dienstes über den Standortwechsel, und liefert der neuen Mobilfunkvermittlungsstelle des verwaltende Dienstes weitere Endgerätedaten.

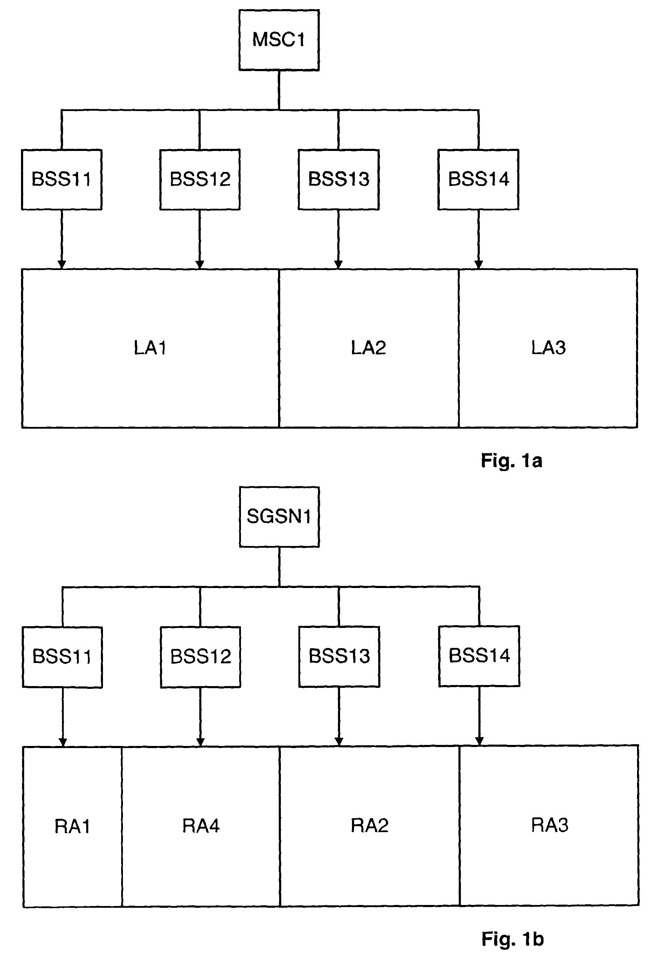

Nach dem Abschluss dieser Prozedur kontaktiert die neue Mobilfunkvermittlungsstelle des verwaltenden Dienstes die neue Mobilfunkvermittlungsstelle des jeweils anderen Dienstes, und informiert sie über den Standortwechsel des Endgeräts.
Für diese Kontaktierung ist es notwendig, dass der übermittelnden Mobilfunkvermittlungsstelle des verwaltenden Dienstes die Signalisierungsadresse einer zu informierenden Mobilfunkvermittlungsstelle des jeweils anderen Dienstes bekannt ist.
Die zur Ermittlung der Signalisierungsadresse der zu informierenden Mobilfunkvermittlungsstelle erforderlichen Informationen werden unter Verwendung der Endgerätedaten gewonnen. Nach Stand der Technik ermittelt die verwaltende Mobilfunkvermittlungsstelle die Signalisierungsadresse der zu informierenden Mobilfunkvermittlungsstelle aus Standortinformationen des Endgeräts.
Eine Standortinformation kann beispielsweise sein, in welchem Standortbereich oder welchem Leitwegebereich sich ein Endgerät befindet.
Ein Standortbereich ist eine räumliche Einheit, die einen Bereich des leitungsvermittelten Dienstes umfasst, der eine oder mehrere Zellen enthält, von einem oder mehreren Basisstationssubsystemen aber von nur einer Mobilfunkvermittlungsstelle versorgt wird. Eine Mobilfunkvermittlungsstelle kann mehrere Standortbereiche versorgen. Ein Leitwegebereich ist eine räumliche Einheit, die einen Bereich des paketvermittelten Dienstes umfasst, der eine oder mehrere Zellen enthält, von einem oder mehreren Basisstationssubsystemen aber von nur einer Mobilfunkvermittlungsstelle versorgt wird. Eine Mobilfunkvermittlungsstelle kann mehrere Leitwegebereiche versorgen. Die Figuren 1a und 1b veranschaulichen diesen Zusammenhang indem sie einen Ausschnitt einer Struktur eines Kommunikationsnetzes zeigen, das ein Gebiet ― unterteilt in die Standortbereiche LA1, LA2, LA3 beziehungsweise die Leitwegebereiche RA1, RA2, RA3, RA4 - versorgt. Figur 1a stellt die Struktur für einen leitungsvermittelten Dienst dar. Dabei versorgt eine Mobilfunkvermittlungsstelle MSC1 vier Basisstationssubsysteme BSS11, BSS12, BSS13, BSS14. Zwei der Basisstationssubsysteme BSS11 und BSS12 versorgen den Standortbereich LA1, das Basisstationssubsystem BSS13 den Standortbereich LA2 und das Basisstationssubsystem BSS14 den Standortbereich LA3.
Analog dazu stellt Figur 1b die Struktur für einen paketvermittelten Dienst dar. Die Mobilfunkvermittlungsstelle SGSN versorgt vier Basisstationssubsysteme BSS11, BSS12, BSS13, BSS14. Das Basisstationssubsystem BSS11 versorgt den Leitwegebereich RA1, Basisstationssubsystem BSS12 den Leitwegebereich RA4, Basisstationssubsystem BSS13 den Leitwegebereich RA2 und Basisstationssubsystem BSS14 den Leitwegebereich RA3. Die Basisstationssubsysteme BSS11 bis BSS14 des leitungsvermittelten Dienstes sind identisch mit denen des paketvermittelten Dienstes. Diese Basisstationssubsysteme werden von beiden Diensten gemeinsam genutzt.

Die Mobilfunkvermittlungsstelle des verwaltenden Dienstes ermittelt aus Informationen über den Standort eines Endgerätes die Signalisierungsadresse der zu informierenden Mobilfunkvermittlungsstelle des anderen Dienstes, dies wird standortbasierter Ansatz genannt.

Im Fall des zuvor erwähnten, GSM und GPRS Dienste anbietenden, zellularen Kommunikationssytems, ist es Stand der Technik, dass eine den GPRS Dienst zur Verfügung stellende Mobilfunkvermittlungsstelle (im weiteren GPRS Dienstknoten genannt) die Aktualisierung von Standortdaten eines Endgerätes übernimmt und diese Daten an eine, den GSM Dienst zur Verfügung stellende, Mobilfunkvermittlungsstelle übermittelt. Weiterhin Stand der Technik ist es, dass ein GPRS Dienstknoten die Signalisierungsadresse einer Mobilfunkvermittlungsstelle unter Verwendung von Leitwegebereichinformationen (im oben genannten Standard GSM TS 03.60 V6.1.0 GPRS Service Description, Stage 2, als Routing Area Information bezeichnet) mittels einer standortbasierten Zuordnungstabelle gewinnt.

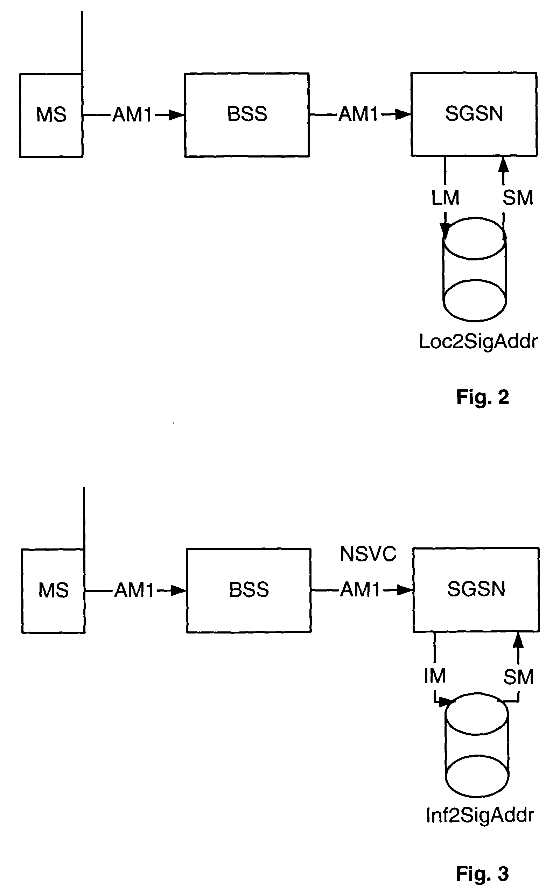

Figur 2 zeigt vereinfacht den Ablauf der Anmeldung eines Endgerätes bis zur Ermittlung der Signalisierungsadresse einer zu benachrichtigenden Mobilfunkvermittlungstelle. Ein Endgerät MS sendet, über ein Basisstationssubsystem BSS, eine oder mehrere Nachrichten an eine Mobilfunkvermittlungstelle SGSN des paketvermittelten Dienstes. Dabei wird eine Nachricht AM1, die eine Standortinformation über das Endgerät MS enthält, von dem Basisstationssubsystem BSS transparent, das heisst unverändert, zur Mobilfunkvermittlungstelle SGSN übermittelt. Die Mobilfunkvermittlungstelle SGSN ermittelt unter Nutzung der Standortinformation die Signalisierungsadresse einer zu benachrichtigenden Mobilfunkvermittlungsstelle des leitungsvermittelten Dienstes.
Eine standortbasierte Zuordnungstabelle Loc2SigAddr liefert auf eine Anfrage LM die gesuchte Signalisierungsadresse in der Antwort SM. Die Standortinformation über das Endgerät MS ist in der Anfrage LM enthalten.

Ein Nachteil der Ermittlung einer Signalisierungsadresse mittels eines standortdatenbasierten Ansatzes ist, dass eine Änderung der Zuordnung von Standorten zu Einrichtungen zwangsläufig eine Änderung einer, für die Ermittlung von Signalisierungsadressen genutzten, standortbasierten Zuordnungstabelle bedingt. Diese Änderungen erhöhen die Administrationskosten des Kommunikationssystems.

Demgemäss ist es Aufgabe der Erfindung, ein Verfahren und eine Vorrichtung zu entwickeln, dass die Signalisierungsadresse einer zu benachrichtigenden Mobilfunkvermittlungsstelle effektiver und kostengünstiger ermittelt.

Dies wird erfindungsgemäss gelöst durch die Lehre des Patentanspruchs 1 und die Lehre des Patentanspruchs 8.

Das in Anspruch 1 beschriebene Verfahren ermittelt die Signalisierungsadresse aus der Information, welche Einrichtungen in der Übertragungsstrecke zur Erreichung dieses Endgerät genutzt werden, ein sogenannter einrichtungsbasierter Ansatz. Die Zuordnung der Signalisierungsadresse erfolgt somit anhand von Daten, die bei einer Änderung der Standortbereiche oder Leitwegebereiche unverändert bleiben, somit muss eine einrichtungsbasierte Zuordnungstabelle weniger oft aktualisiert werden als bei eine standortbasierte. Dadurch sinken sowohl die Kosten für die vorstehend genannten Änderungen, als auch die Administrationskosten der Zuordnungstabelle.

Weitere vorteilhafte Ausgestaltungen sind den Ansprüchen 2 bis 7 und 9 bis 12 zu entnehmen.

Eine Ausgestaltung der Erfindung nach Anspruch 2, bei der die Ermittlung der Signalisierungsadresse in einer Mobilfunkvermittlungsstelle durchgeführt wird, bietet den Vorteil, dass wenige Vorrichtungen erforderlich sind.

Als vorteilhaft zur Senkung der Erstellungskosten und der Administrationskosten einer einrichtungsbasierten Zuordnungstabelle erweist es sich gemäss Anspruch 3, die Zuordnung anhand der Identifikation einer Einrichtung durchzuführen, die eine in einer Systemhierarchie oberste Einrichtung ist, die vom leitungsvermittelten und paketvermittelten Dienst gemeinsam genutzt wird. Auf diese Weise kann man eine Zuordnungstabelle mit möglichst wenigen Elementen aufbauen.

Im folgenden wird die Erfindung anhand eines Ausführungsbeispieles und anhand von Figuren näher erläutert.
Folgende Figuren zeigen:
- Fig. 1a:: Anordnung eines zellularen, leitungsvermittelten Kommunikationssytems für ein bestimmtes Gebiet aufgeteilt in die Standortbereiche LA1 bis LA3,
- Fig. 1b:: Anordnung eines zellularen, paketvermittelten Kommunikationssytems für dasselbe Gebiet aufgeteilt in die Leitwegebereiche RA1 bis RA4,
- Fig. 2 :: Anmeldung eines Endgerätes bis zur Bestimmung der Signaladresse beim standortbasierten Ansatz,
- Fig. 3 :: Anmeldung eines Endgerätes bis zur Bestimmung der Signaladresse durch eine Mobilfunkvermittlungsstelle beim gerätebasierten Verfahren,
- Fig. 4 :: Standortaktualisierung für Leitwegebereich und Standortbereich,
- Fig. 5 :: Hierarchie eines Kommunikationssystems, das sowohl einen leitungsvermittelten als auch einen paketvermittelten Dienst zur Verfügung stellt.

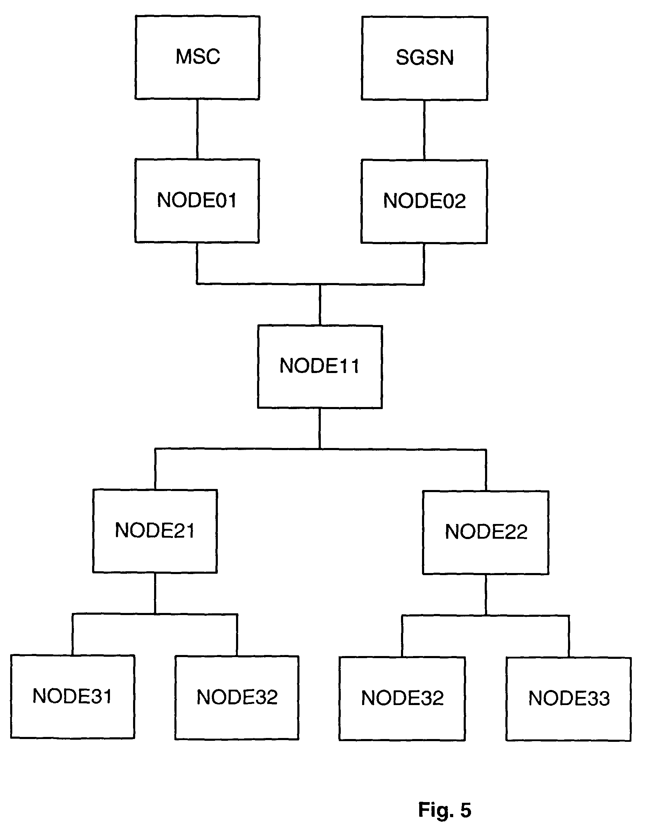

Bei dem einrichtungsbasierten Ansatz, wird mindestens eine von beiden Diensten gemeinsam zur Erreichung des Endgerätes genutzte Einrichtung identifiziert. Da jede gemeinsam genutzte Einrichtung eindeutig genau einer Mobilfunkvermittlungsstelle pro Dienst zugeordnet ist, kann die Signalisierungsadresse der Mobilfunkvermittlungsstelle aus der Kenntnis der Einrichtung bespielsweise mittels einer einrichtungsbasierten Zuordnungstabelle gewonnen werden. Diese Zuordnungstabelle kann sich beispielsweise in einem GPRS Dienstknoten befinden. Um die Zuordnungstabelle möglichst klein zu halten, ist es sinnvoll, eine Einrichtung derjenigen Kategorie zu identifizieren, die die in der Systemhierarchie oberste, vom leitungsvermittelten und paketvermittelten Dienst gemeinsam zur Versorgung eines Endgerät genutzte, ist. Gemäss Figur 5 wird veranschaulicht, was unter einer in der Systemhierarchie oberste, von den paketvermittelten und leitungsvermittelten Diensten gemeinsam genutzten Einrichtung zu verstehen ist. Hierbei stellt Figur 5 einen Ausschnitt eines zellularen Kommunikationssytems für mobile Nutzer, das sowohl leitungsvermittelte als auch paketvermittelte Dienste anbietet, dar. Dieser Ausschnitt enthält eine Mobilfunkvermittlungsstelle MSC des leitungsvermittelten Dienstes sowie eine Mobilfunkvermittlungsstelle SGSN des paketvermittelten Dienstes. Darüber hinaus sind mehrere - in ihrer Funktionalität nicht näher spezifizierte - Dienstknoten NODE01, NODE02, NODE11, NODE21, NODE22, NODE31, NODE32 und NODE33 aufgeführt. Dienstknoten NODE01 ist beispielsweise ein Knoten des leitungsvermittelten Dienstes, Dienstknoten NODE02 ein Knoten des paketvermittelten Dienstes. Die Dienstknoten NODE11 bis NODE33 werden von beiden Diensten gemeinsam genutzt, wobei Dienstknoten NODE11 der in der Systemhierarchie oberste, von den paketvermittelten und leitungsvermittelten Diensten gemeinsam genutzte ist. Diese Einrichtung kann ein Basisstationssubsystem oder eine Funknetzwerksteuerungseinrichtung sein. Unter Mobilfunkvermittlungsstellen im Sinne dieser Anmeldung sind Dienstknoten des oben genannten Kommunikationssystemes zu verstehen, die mit Vermittlungsaufgaben befasst sind, und die von ihnen gespeicherten Nachrichtenverkehrsdaten bei einer Standortaktualisierung anpassen.

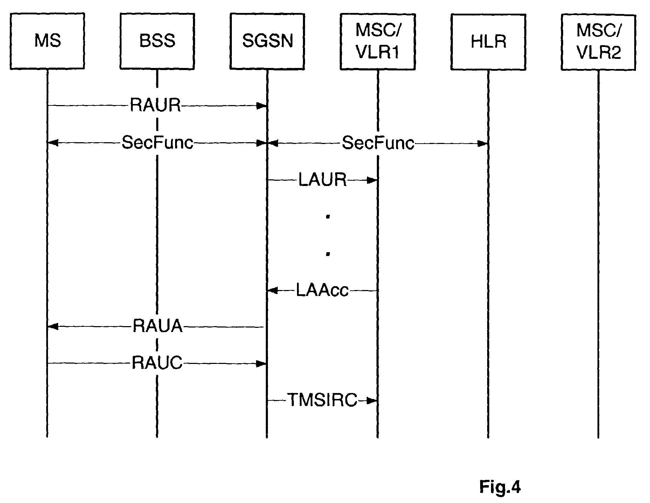

Für den oben genannten Fall der Einführung von GPRS in GSM ergibt sich bei einer gemeinsamen Standortbereichs- und Leitwegebereichsaktualisierung folgender Ablauf, wie in Figur 4 gezeigt.

In einem ersten Schritt meldet sich ein Endgerät MS über ein Basisstationssubsystem BSS bei einem GPRS Dienstknoten SGSN mit einer Leitwegeaktualisierungsanforderung RAUR an. Das Basisstationssubsystem BSS übermittelt diese Leitwegeaktualisierungsanforderung RAUR über einen für sie reservierten Rahmenweiterleitungskanal. Durch die Nutzung dieses Kanals wird das Basisstationssubsystem BSS eindeutig identifiziert. Danach werden mehrere Nachrichten SecFunc für Sicherheitsfunktionen zwischen dem Endgerät MS, dem GPRS Dienstknoten SGSN und der Heimatdatei HLR ausgetauscht.
Anschliessend ermittelt der GPRS Dienstknoten SGSN aus der Information, welches Basisstationssubsystem in der Übertragungsstrecke genutzt wird, die Signalisierungsadresse einer zu informierenden Mobilfunkvermittlungsstelle. Nun initiiert der GPRS Dienstknoten SGSN in der zu informierenden Mobilfunkvermittlungsstelle MSC/VLR1 die Standortaktualisierung mit der Standortaktualisierungsanforderrung LAUR. Die sich anschliessenden Schritte bis einschliesslich der Temporären-Teilnehmerkennungs-Neuanordnungs-Nachricht TMSIRC sind für die Erfindung nicht mehr relevant und werden demgemäss nicht mehr erläutert. Bei dieser Lösung werden folgende Vorrichtungen genutzt:
Eine Vorrichtung die in einem GPRS Dienstknoten eingerichtet ist, mit Mitteln zur Zuordnung einer Sinalisierungsadresse einer leitungsvermittelten Mobilfunkvermittlungssstelle/Besucherdatei eines GSM Netzes zu einer Informatin, die eine oder mehrere Einrichtungen eindeutig identifiziert.
Die Vorrichtung identifiziert in dem GPRS anbietenden Dienstknoten SGSN anhand des von der Basisstationssubsystem BSS verwendeten Rahmenweiterleitungskanals. Die zur Bestimmung der Signalisierungsadresse genutzten Mittel können eine Zuordnungstabelle oder ein Sortierbaum sein, die dem identifizierten Rahmenweiterleitungskanal die Signalisierungsadresse zuordnen.

Alternativ kann auch mithilfe eines Sortierbaumes oder einer Zuordnungstabelle erst das Basisstationssubbsystem aus der Kenntnis des Rahmenweiterleitungskanals bestimmt werden. Anschliessend wird anhand des identifizierten Basisstationssubsytems die Signalisierungsadresse ermittelt. Dazu wird eine Vorrichtung genutzt, die in einem GPRS anbietenden Dienstboten eingerichtet ist, mit Mitteln zur Zuordnung der Signalisierungsadresse zu der Information, welches Basisstationssubsystem von beiden Diensten gemeinsam genutzt wird. Diese Mittel können eine Zuordnungstabelle oder ein Sortierbaum sein, die dem indentifizierten Basisstationssubsystem BSS eine Signalisierungsadresse zuordnen.

Eine Anmeldung eines Endgerätes bis zur Ermittlung der Signalisierungsadresse einer zu benachrichtigenden Mobilfunkvermittlungstelle wird in Figur 3 veranschaulicht. Ein Endgerät MS sendet über ein Basisstationssubsystem BSS eine oder mehrere Nachrichten an eine Mobilfunkvermittlungstelle SGSN eines paketvermittelten Dienstes. Dabei wird eine Nachricht AM1, die Informationen über das Endgerät MS enthält, von dem Basisstationssubsystem zur Mobilfunkvermittlungstelle SGSN übermittelt. Das Basisstationssubsystem übermittelt diese Information über einen für sie reservierten Rahmenweiterleitungskanal NSVC. Durch die Nutzung dieses Kanals wird das Basisstationssubsystem eindeutig identifiziert. Die Mobilfunkvermittlungstelle SGSN ermittelt unter Nutzung dieser Identifikation die Signalisierungsadresse einer zu benachrichtigenden Mobilfunkvermittlungsstelle des leitungsvermittelten Dienstes. Dazu sendet sie die Identifikation in einer Anfrage IM an eine einrichtungsbasierte Zuordnungstabelle Inf2SigAddr. Die einrichtungsbasierte Zuordnungstabelle Inf2SigAddr liefert die gesuchte Signalisierungsadresse in einer Antwort SM.

In einer Ausgestaltung der Erfindung für ein UMTS anbietendes Kommunikationssystem läuft das Verfahren vergleichbar ab. In dieser Ausgestaltung meldet sich ein Endgerät über eine Funknetzwerkssteuerungseinrichtung bei einer Mobilfunkvermittlungsstelle an. Bei der Übertragung von der Funknetzwerkssteuerungseinrichtung zur Mobilfunkvermittlungsstelle wird ein Signalisierungskanal nach dem SCCP (Signalling Connection Control Part) Protokoll verwendet, der die Funknetzwerkssteuerungseinrichtung eindeutig identifiziert. In der Mobilfunkvermittlungsstelle bestimmt eine Vorrichtung mit Mitteln zur Zuordnung der Signalisierungsadresse zu einer Information, die eine oder mehrere Einrichtungen eindeutig identifiziert, die gesuchte Signalisierungsadresse. In diesem Ausführungsbeispiel wird eine Funknetzwerkssteuerungseinrichtung identifiziert. Die Mittel zur Zuordnung können beispielsweise eine Zuordnungstabelle oder ein Sortierbaum sein, die der Information welcher Signalisierungskanal verwendet wird, die Signalisierungsadresse zuordnen.

## Patentansprüche

1. Verfahren für ein zellulares Kommunikationssystem, mit jeweils mindestens einer Mobilfunkvermittlungsstelle zur Bereitstellung eines leitungsvermittelten und eines paketvermittelten Dienstes, zur Ermittlung einer Signalisierungsadresse einer Mobilfunkvermittlungsstelle die einen der beiden Dienste anbietet, mit folgenden Schritten:
- Identifizierung einer oder mehrerer Einrichtungen des Kommunikationssystems, die sowohl von dem leitungsvermittelten als auch von dem paketvermittelten Dienst genutzt werden, um in einer Übertragungsstrecke ein bestimmtes Endgerät zu erreichen und
- Ermittlung der Signalisierungsadresse unter Nutzung der Identifizierung.

2. Verfahren nach Anspruch 1, bei dem
die Ermittlung der Signalisierungsadresse in der Mobilfunkvermittlungsstelle durchgeführt wird, die den jeweils anderen der beiden Dienste anbietet.

3. Verfahren nach Anspruch 1 oder 2, bei dem
als Einrichtung die in einer Systemhierarchie oberste Einrichtung identifiziert wird.

4. Verfahren nach Anspruch 1, 2 oder 3 , bei dem
die Signalisierungsadresse einer leitungsvermittelnden Mobilfunkvermittlungsstelle/Besucherdatei eines GSM (Global System for Mobile communication) Netzes von einem GPRS (General Packet Radio Service) anbietenden Dienstknoten ermittelt wird, indem dieser einer Information, die eine oder mehrere Einrichtungen identifiziert, eine Signalisierungsadresse zuordnet.

5. Verfahren nach Anspruch 4 , bei dem
die Einrichtung ein Basisstationssubsystem ist.

6. Verfahren nach Anspruch 1 oder 2, bei dem
die Signalisierungsadresse einer leitungsvermittelnden Mobilfunkvermittlungsstelle/Besucherdatei eines UMTS (Universal Mobile Telecommunication System) Netzes von einem GPRS (General Packet Radio Service) anbietenden Dienstknoten ermittelt wird.

7. Verfahren nach Anspruch 6 , bei dem
die Einrichtung eine Funknetzwerksteuerungseinrichtung (Radio Network Controller) ist.

8. Vorrichtung zur Bestimmung einer Signalisierungsadresse einer Mobilfunkvermittlungsstelle in einem zellularen Kommunikationssystem, das sowohl leitungsvermittelte als auch paketvermittelte Dienste anbietet, eingerichtet in einem oder mehreren Dienstknoten,
**gekennzeichnet, durch**
Mittel zur Identifizierung einer oder mehrerer Einrichtungen des Kommunikationssystems, die von dem leitungsvermittelten und von dem paketvermittelten Dienst gemeinsam genutzt werden, um in einer Übertragungsstrecke ein bestimmtes Endgerät zu erreichen, und Mittel zur Bestimmung der Signalisierungsadresse, das anhand der Identifikation die gesuchte Signalisierungsadresse bestimmt.

9. Vorrichtung nach Anspruch 8
die in einem GPRS anbietenden Dienstknoten eingerichtet ist, mit Mitteln zur Zuordnung einer Signalisierungsadresse einer leitungsvermittelnden Mobilfunkvermittlungsstelle/Besucherdatei eines GSM Netzes zu einer Information, die eine oder mehrere Einrichtungen eindeutig identifiziert.

10. Vorrichtung nach Anspruch 9
bei dem die Einrichtung ein Basisstationssubsystem ist.

11. Vorrichtung nach Anspruch 8
die in einem GPRS anbietenden Dienstknoten eingerichtet ist, mit Mitteln zur Zuordnung der Signalisierungsadresse einer leitungsvermittelnden Mobilfunkvermittlungsstelle/Besucherdatei eines UMTS Netzes zu einer Information, die eine oder mehrere Einrichtungen eindeutig identifiziert.

12. Vorrichtung nach Anspruch 8
eingerichtet in einem GPRS anbietenden Dienstknoten, mit Mitteln zur Zuordnung der Signalisierungsadresse zu einer Information, welche Funknetzwerksteuerungseinrichtung (Radio Network Controller) von beiden Diensten gemeinsam genutzt wird.
